# FASCICULE DE BREVET EUROPEEN

(11) **EP 1 753 251 B1**
(45) Date de publication et mention de la délivrance du brevet: **29.12.2010**
(21) Numéro de dépôt: 05300660.7
(22) Date de dépôt: 10.08.2005
(51) Int. Cl.: H04W 4/06

(54) **Procédé de transmission de messages d'alarme urgents à des ensembles de terminaux mobiles situés dans des cellules d'un réseau de communication radio, et contrôleur de réseau associé**
Verfahren zur Übertragung dringender Alarmmeldungen an die sich in den Zellen eines Mobilfunknetzes befindenden Mobilfunkgeräte und die zugehörige Netzsteuerung
Method of transmitting urgent alarm messages to mobile terminals being located in cells of a mobile communication network and a correponding network controller

(43) Date de publication de la demande: 14.02.2007
(73) Titulaire: Alcatel Lucent, 75008 Paris (FR)
(72) Inventeur: Thiebaut, Laurent, 92160 Antony (FR); Raynaud, René, 78350 Jouy En Josas (FR)
(74) Mandataire: Korakis-Ménager, Sophie

(56) Documents cités:
- WO-A-2004/012470
- US-A1- 2003 143 974
- "Digital cellular telecommunications system (Phase 2+); Universal Mobile Telecommunications System (UMTS); Technical realization of Cell Broadcast Service (CBS) (3GPP TS 23.041 version 5.2.0 Release 5); ETSI TS 123 041" ETSI STANDARDS, EUROPEAN TELECOMMUNICATIONS STANDARDS INSTITUTE, SOPHIA-ANTIPO, FR, vol. 3-T2, no. V520, décembre 2003 (2003-12), XP014016439 ISSN: 0000-0001
- "Smart cards; Card Application Toolkit (CAT) (Release 5); ETSI TS 102 223" ETSI STANDARDS, EUROPEAN TELECOMMUNICATIONS STANDARDS INSTITUTE, SOPHIA-ANTIPO, FR, vol. SCP-WG3, no. V580, décembre 2004 (2004-12), XP014027305 ISSN: 0000-0001

## Description

L'invention concerne les réseaux de communication radio mobiles (ou cellulaires), et plus précisément la transmission de messages d'alarme urgents à des terminaux de communication mobiles rattachés à de tels réseaux.

On entend ici par « terminal de communication mobile » tout équipement de communication radio mobile (ou cellulaire, ou encore portable) capable de se connecter à un réseau radio mobile, via un réseau d'accès radio, afin d'échanger des données sous la forme de signaux avec un autre équipement. Il pourra donc s'agir, par exemple, d'un téléphone mobile, ou d'un ordinateur portable ou d'un assistant personnel numérique (ou PDA) équipé d'un module de communication radio.

Dans certaines situations d'urgence, comme par exemple en cas de prévision d'une catastrophe imminente, naturelle ou non, dans une zone géographique donnée, il est d'une très grande importance d'alerter le plus possible de personnes présentes dans cette zone géographique afin qu'elles tentent de s'en éloigner le plus possible.

Pour ce faire, il est possible de transmettre aux utilisateurs de terminaux mobiles, sans monopoliser trop de ressources, des messages textuels courts, connus sous le nom de SMS (pour « Short Message System »). Plus précisément, et comme le sait l'homme de l'art, on peut transmettre aux terminaux mobiles soit des SMS de type point-à-point (c'est-à-dire dirigés vers un utilisateur précis et identifié), tels que définis par la spécification 23.040 du 3GPP, soit des SMS de type CB (« SMS-CB » pour SMS-Cell Broadcast service), tels que définis par la spécification 23.041 du 3GPP.

Le document US 2003/143974 A1 décrit le transmission de messages d'alarme dans un système radio mobil. Le document ETSI TS 102 223 V5.8.0 (Smart cards; Card Application Toolkit (CAT)) définit des fonctions d'une carte électronique aussi de type SIM dans un téléphone mobile.

Il est rappelé que les messages courts de type SMS-CB assurent un service qui est similaire à celui assuré par le service « Teletext » accompagnant les programmes de télévision. Il permet la diffusion à des ensembles de terminaux mobiles, situés dans des cellules radio choisies (dites de diffusion) d'au moins une zone géographique (voire même l'ensemble d'un réseau de type PLMN), de messages courts de type SMS-CB sans accusé de réception. Cette diffusion se fait par l'intermédiaire du réseau d'accès radio du réseau mobile, et plus précisément de chaque contrôleur de réseau radio contrôlant les communications radio au niveau de l'une au moins des cellules radio de diffusion.

Dans le cas d'une transmission de messages courts de type SMS point-à-point, le réseau d'accès radio doit tout d'abord déterminer les identifiants des abonnés dont les terminaux mobiles sont situés dans chaque cellule radio de diffusion, afin de pouvoir leur transmettre lesdits messages courts (SMS point-à-point). Les contrôleurs de réseau radio des réseaux d'accès radio ne gardant trace que des abonnés en communication, la détermination des abonnés localisés dans les cellules radio de diffusion du message d'alerte est donc :
- soit imprécise car effectuée au niveau du réseau de coeur (par exemple par l'équipement appelé MSC (pour « Mobile Service Switching Centre ») ou l'équipement appelé SGSN (« Serving GPRS Support Node »)) c'est-à-dire au niveau de zones géographiques définies pour les besoin propres du réseau mobile, telles que des « Location Areas » (groupes de cellules) ou des « Routing Areas » (aires de routage)) et donc non définies pour les besoins de la situation d'urgence nécessitant d'alerter les utilisateurs,
- soit lourde car impliquant de définir de nouvelles interfaces impliquant le gestionnaire de messages d'urgence, des noeuds du réseau de coeur mobile (par exemple le MSC ou le SGSN), les contrôleurs de réseau radio et les terminaux pour déterminer les identifiants des utilisateurs possédant les terminaux mobiles qui sont situés dans les cellules de la ou des zones d'alerte concernées par la notification d'urgence.

Les SMS point-à-point doivent ensuite être stockés, puis transmis, si bien qu'ils ne sont pas réellement appropriés aux envois massifs en temps réel. En outre, il peut être relativement long de joindre un utilisateur dont le terminal est rattaché provisoirement à un réseau d'accès radio visité qui n'est pas celui de son réseau d'appartenance (situation dite de « roaming »). Il faut en effet que le réseau qui émet le message d'alerte (c'est à dire le réseau « visité » dans lequel se trouve l'abonné à contacter), joigne l'équipement appelé HLR (pour « Home Location Register ») du réseau d'appartenance de l'utilisateur (abonné) de ce terminal, pour déterminer son noeud de rattachement (par exemple le MSC ou le SGSN), puis revienne afin de lui transmettre le SMS point-à-point au moyen de son réseau d'accès radio visité. Cela peut s'avérer relativement long, et donc incompatible avec la transmission d'un message d'alarme en urgence, en particulier si cette procédure doit être mise en oeuvre pour tous les terminaux mobiles qui sont situés dans la zone d'alerte.

Dans le cas d'une transmission de messages courts de type SMS-CB, les terminaux mobiles (actuels) qui les reçoivent ne peuvent qu'afficher leurs contenus, sans pouvoir alerter leurs utilisateurs. Par conséquent, si le terminal de l'utilisateur est en veille (ou mode dit « Idle ») son utilisateur ne peut savoir qu'un message lui a été transmis qu'à condition qu'il regarde accidentellement l'écran de son terminal mobile, ou bien qu'il décide d'utiliser ledit terminal mobile. En outre, si le terminal mobile est utilisé dans le cadre d'une communication vocale (par exemple de type GSM), il n'est pas en mesure de réceptionner le message SMS-CB étant donné qu'un terminal mobile engagé dans une communication ne peut pas simultanément écouter le canal radio dédié à cette communication et le canal radio transportant le message SMS-CB.

Aucune solution connue n'apportant une entière satisfaction, l'invention a donc pour but d'améliorer la situation, et notamment de permettre la transmission de messages d'alarme en urgence, c'est-à-dire quasiment en temps réel.

Elle propose à cet effet un procédé dédié à la transmission de messages d'alarme urgents dans un réseau de communication radio comportant un réseau d'accès radio contrôlant les communications de terminaux mobiles situés dans des cellules radio.

Ce procédé consiste à effectuer les étapes suivantes :
- a) générer dans un centre d'alarme un premier message de type SMS-CB, associé à une classe d'alarme choisie de niveau choisi, contenant un message textuel d'alarme et destiné à des terminaux mobiles situés dans au moins une cellule choisie (d'au moins une zone d'alerte),
- b) transmettre ce premier message au réseau d'accès radio,
- c) interrompre au moyen du réseau d'accès radio la transmission vers les terminaux mobiles situés dans chaque cellule choisie de tout message de type SMS-CB associé à une classe de niveau inférieur à celui de la classe d'alarme choisie,
- d) diffuser le premier message aux terminaux mobiles situés dans chaque cellule choisie, au moyen du réseau d'accès radio (ce sont essentiellement les terminaux en mode de veille (ou « idle ») qui peuvent recevoir ce message de type SMS-CB), et
- e) émettre un signal d'alarme et afficher un message textuel d'alarme au niveau de chaque terminal mobile ayant reçu le premier message.

Le procédé selon l'invention peut comporter d'autres caractéristiques qui peuvent être prises séparément ou en combinaison, et notamment :
- en présence d'un terminal mobile comprenant une carte d'identification de type SIM (pour « Subscriber Identification Module ») agencée pour prendre son contrôle au moyen de commandes spécifiques, le terminal peut en e) transmettre à sa carte d'identification tout premier message (de type SMS-CB) reçu afin que la carte génère des commandes spécifiques destinées à ordonner à son terminal d'émettre le signal d'alarme et d'afficher le message textuel d'alarme. Cette option permet de ne pas avoir à modifier le terminal pour supporter la réception de (premiers) messages d'alerte urgents via SMS-CB ;
- en cas de réception d'un premier message (de type SMS-CB) par un terminal mobile en cours d'établissement d'une communication vocale, on superpose en e) le signal d'alarme audio à l'éventuelle liaison audio descendante ;
- en cas de réception d'un premier message (de type SMS-CB) par un terminal mobile n'ayant pas initié d'établissement de communication vocale, on émet en e) le signal d'alarme audio avec des moyens de diffusion sonore du terminal (par exemple son haut-parleur) ;
- on peut réitérer les étapes a) à e) un nombre choisi de fois (de préférence sous le contrôle du centre d'alarme et au moyen de la procédure SMS-CB classique entre le centre d'alarme et le réseau d'accès radio) ;
- pour la première tentative de transmission d'un premier message SMS-CB, on peut à l'étape c) libérer au moyen du réseau d'accès radio toutes les ressources radio utilisées par les terminaux mobiles impliqués dans une communication et situés dans chaque cellule choisie, de manière à forcer ces terminaux mobiles à repasser en mode de veille. Ce relâchement forcé des ressources radio n'est préférentiellement mis en oeuvre que lors de la première tentative de transmission d'un premier message de type SMS-CB, car il risquerait ensuite d'interrompre des communications entre des membres des équipes d'intervention et/ou d'urgence situés dans la ou les zones d'alerte ;
- pour le cas où la tentative de transmission d'un premier message SMS-CB a échoué (pour les terminaux mobiles qui ne sont pas en mode de veille - c'est-à-dire ceux ayant établi une communication avec le réseau- et qui sont situés dans la ou les cellules choisies), on peut déterminer dans une étape f), au moyen du réseau d'accès radio, des premiers identifiants (radio) pour chacun de ces terminaux mobiles, puis on génère dans une étape g) un second message de type SMS point-à-point, contenant un message textuel d'alarme, à partir du premier message, et on transmet dans une étape h) ce second message à chaque terminal mobile détecté afin que le message textuel d'alarme qu'il contient puisse être affiché sur son écran ;
   ➢ à l'étape g) le réseau d'accès radio peut transmettre au centre d'alarme les premiers identifiants des terminaux d'abonnés qui ne peuvent être joints par la procédure SMS-CB (étapes a) à e)), afin que le centre d'alarme génère un second message (de type SMS point-à-point), puis qu'il transmette à l'étape h) ce second message vers chacun de ces terminaux. Ceci nécessite la transformation du premier identifiant (d'abonné) tel qu'il est connu au niveau du réseau d'accès radio (par exemple l'IMSI) en un second identifiant (de communication) qui est utilisé par le réseau SMS point-à-point, et donc la consultation de la base de données d'informations clients (par exemple de type HSS, pour « Home Subscriber System ») du réseau de rattachement de chaque terminal ;
   ➢ en variante, c'est le réseau d'accès radio qui peut générer à l'étape g) un second message (de type SMS point-à-point) à partir du premier message, puis transmettre en h) ce second message à chaque terminal mobile détecté, après avoir déterminé son second identifiant (de communication) ;
   ➢ à l'étape h) on peut signaler la réception d'un second message (de type SMS point-à-point) par un terminal mobile ayant établi une communication vocale, en superposant un signal audio à la liaison audio descendante de cette communication vocale ;
   ➢ à l'étape h) en cas de réception d'un second message (de type SMS point-à-point) par un terminal mobile ayant établi une communication d'un autre type qu'une communication vocale, on peut signaler cette réception en émettant un signal audio avec des moyens de diffusion sonore du terminal (par exemple son haut-parleur) ;
   ➢ en présence d'un terminal mobile comprenant une carte d'identification de type SIM capable de prendre son contrôle au moyen de commandes spécifiques, le terminal mobile peut transmettre à sa carte d'identification tout second message de type SMS point à point reçu, afin que cette carte génère des commandes spécifiques destinées à ordonner à son terminal mobile d'émettre le signal d'alarme et d'afficher le message textuel d'alarme ;
   ➢ à l'étape h) on peut déterminer en une seule opération auprès de la base de données d'informations clients les seconds identifiants (de communication) des terminaux mobiles et des informations de routage permettant d'atteindre ces terminaux mobiles via un second message de type SMS point-à-point, à partir des premiers identifiants (radio) des terminaux mobiles (par exemple leur IMSI).

L'invention propose également un contrôleur de réseau radio, pour un réseau d'accès radio, comprenant des moyens de traitement chargés, en cas de réception (en provenance d'un centre d'alarme) d'un premier message de type SMS-CB, associé à une classe d'alarme choisie de niveau choisi, contenant un message textuel d'alarme et destiné à des terminaux mobiles situés dans au moins une cellule choisie qu'il contrôle, d'interrompre la transmission vers les terminaux mobiles, situés dans chaque cellule choisie de tout message de type SMS-CB associé à une classe de niveau inférieur à celui de la classe d'alarme choisie, afin que ce premier message puisse être diffusé aux terminaux mobiles qui sont situés dans les cellules choisies et que certains au moins d'entre eux procèdent à l'émission d'un signal d'alarme et à l'affichage du message textuel d'alarme contenu dans le premier message.

Le contrôleur de réseau radio peut comporter d'autres caractéristiques qui peuvent être prises séparément ou en combinaison, et notamment :
- ses moyens de traitement peuvent par exemple être chargés de réitérer l'envoi d'un premier message un nombre choisi de fois ;
- pour la première tentative de transmission d'un premier message SMS-CB, ses moyens de traitement peuvent par exemple être chargés de libérer toutes les ressources radio utilisées par les terminaux mobiles impliqués dans une communication et situés dans chaque cellule choisie qu'il contrôle, de manière à forcer ces terminaux mobiles à repasser en mode de veille ;
- pour le cas où la tentative de transmission d'un premier message SMS-CB a échoué (pour les terminaux mobiles qui ne sont pas en mode de veille - c'est-à-dire ceux ayant établi une communication avec le réseau - et qui sont situés dans la ou les cellules choisies qu'il contrôle), ses moyens de traitement peuvent par exemple être chargés de déterminer les premiers identifiants des terminaux d'abonnés qui ne peuvent être joints par la procédure SMS-CB, puis de transmettre au centre d'alarme ces premiers identifiants afin qu'il génère un second message (de type SMS point-à-point) et qu'il transmette ce second message vers chacun de ces terminaux, après avoir déterminé leur second identifiant de communication à partir de leur premier identifiant ;
- en variante, ses moyens de traitement peuvent par exemple être chargés de déterminer des premiers identifiants (radio) pour chacun de ces terminaux mobiles, puis de générer un second message de type SMS point-à-point, contenant un message textuel d'alarme, à partir du premier message, puis de déterminer le second identifiant de communication de chacun de ces terminaux mobiles à partir de leurs premiers identifiants, et de transmettre le second message à chaque terminal mobile détecté afin que le message textuel d'alarme qu'il contient puisse être affiché sur son écran.

L'invention propose également un centre d'alarme comprenant des moyens de traitement chargés de transmettre à des contrôleurs de réseau radio choisis, du type de ceux présentés ci-avant, un premier message de type SMS-CB, et, en cas de réception en provenance de l'un au moins de ces contrôleurs de réseau radio de premiers identifiants (radio) de terminaux mobiles n'ayant pas pu être joints par le premier message de type SMS-CB, de générer un second message de type SMS point-à-point puis de transmettre ce dernier vers chacun des terminaux mobiles non joints, après avoir déterminé des seconds identifiants de communication de SMS point à point pour ces terminaux mobiles, à partir de leurs premiers identifiants radio respectifs.

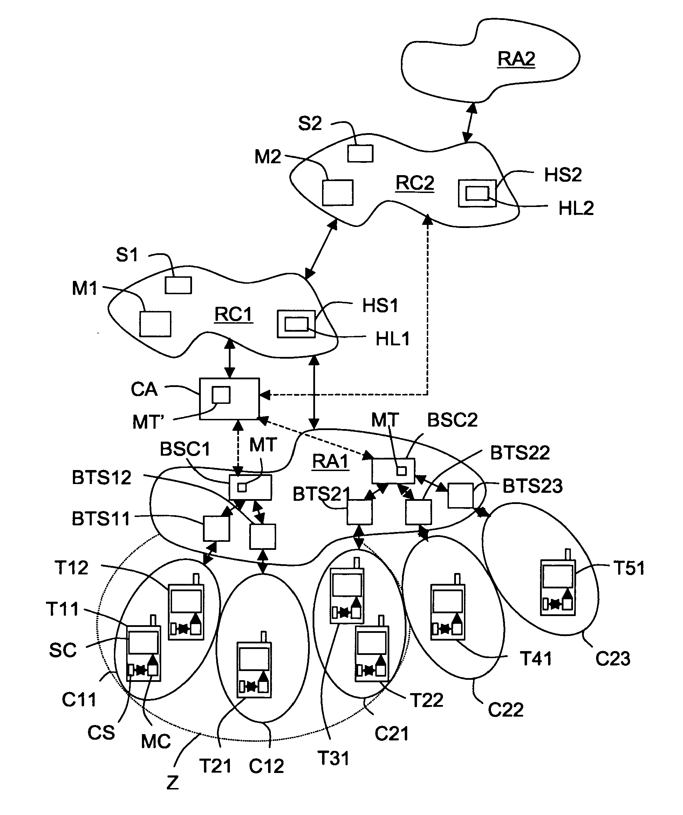

D'autres caractéristiques et avantages de l'invention apparaîtront à l'examen de la description détaillée ci-après, et du dessin annexé, sur lequel l'unique figure illustre de façon très schématique deux réseaux radio mobiles couplés l'un à l'autre, le premier comportant un second réseau radio mobile comprenant des exemples de réalisation de contrôleur de réseau radio selon l'invention. Le dessin annexé pourra non seulement servir à compléter l'invention, mais aussi contribuer à sa définition, le cas échéant.

L'invention a pour objet de permettre la transmission de messages d'alarme en urgence, c'est-à-dire quasiment en temps réel, à des terminaux de communication mobiles (ou cellulaires) rattachés à des réseaux de communication mobile (ou cellulaire).

Dans ce qui suit, on considère à titre d'exemple non limitatif que les terminaux de communication mobiles sont des téléphones mobiles (ou cellulaires). Mais, l'invention n'est pas limitée à ce type de terminal mobile. Elle concerne en effet tout équipement de communication radio mobile (ou cellulaire, ou encore portable) capable de se connecter à un réseau radio mobile, via un réseau d'accès radio, afin d'échanger des données sous la forme de signaux avec un autre équipement. Il pourra donc s'agir, notamment, d'un ordinateur portable ou d'un assistant personnel numérique (ou PDA) équipé d'un module de communication radio.

Tout type de réseau de communication mobile (ou cellulaire) de type PLMN est concerné par l'invention, qu'il soit de type 2G, comme les réseaux GPRS/GSM, de type 2,5G, comme les réseaux GPRS/EDGE, ou de type 3G, comme les réseaux UMTS, ou qu'il s'agisse d'un de leurs équivalents.

Dans l'exemple non limitatif illustré sur l'unique figure, on a représenté deux réseaux (de communication) mobiles couplés l'un à l'autre. Mais l'invention n'est pas limitée à cet exemple. Elle s'applique en effet à toutes les situations impliquant au moins un réseau mobile.

On considère dans ce qui suit, à titre d'exemple illustratif, que les deux réseaux mobiles sont des réseaux de type GSM. Mais, il pourrait s'agir de réseaux mobiles de types différents.

Comme cela est illustré sur l'unique figure un réseau mobile (ou cellulaire) peut, d'une façon très schématique mais néanmoins suffisante à la compréhension de l'invention, être résumé à un réseau de coeur GPRS (ou « GPRS Core Network ») RCi couplé à un réseau d'accès radio RAi (appelé BSS). Ici l'indice de réseau i est égal à 1 ou 2.

Le réseau d'accès radio RAi comporte des stations de base (ou « base stations ») BTSjk et des contrôleurs de réseau radio BSCj, raccordés entre eux par un réseau de transport privé. Dans l'exemple non limitatif illustré, le premier réseau d'accès radio RA1 comprend un premier contrôleur de réseau radio BSC1 (j=1) raccordé à deux stations de base BTS11 (j=1, k=1) et BTS12 (j=1, k=2) et un second contrôleur de réseau radio BSC2 (j=2) raccordé à trois stations de base BTS21 (j=2, k=1), BTS22 (j=2, k=2) et BTS23 (j=2, k=3).

Chaque station de base BTSjk est associée à au moins une cellule logique Cjk couvrant une zone radio dans laquelle des terminaux mobiles Tni peuvent établir (ou poursuivre) des liaisons radio. Dans l'exemple non limitatif illustré, deux terminaux mobiles T11 (n=1, i=1) et T12 (n=1 et i=2) sont situés dans une première cellule C11, rattachée à la station de base BTS11, un terminal mobile T21 (n=2, i=1) est situé dans une deuxième cellule C12, rattachée à la station de base BTS12, deux terminaux mobiles T31 (n=3, i=1) et T22 (n=2 et i=2) sont situés dans une troisième cellule C21, rattachée à la station de base BTS21, un terminal mobile T41 (n=4, i=1) est situé dans une quatrième cellule C22, rattachée à la station de base BTS22, et un terminal mobile T51 (n=5, i=1) est situé dans une cinquième cellule C23, rattachée à la station de base BTS23. Ici, les terminaux mobiles Tn1 appartiennent à des utilisateurs qui sont clients du premier réseau (RC1, RA1). Ils sont donc momentanément rattachés à leur réseau d'appartenance. En revanche, les terminaux mobiles Tn2 appartiennent à des utilisateurs qui sont clients du second réseau (RC2, RA2). Ils sont donc momentanément en situation dite de « roaming » du fait qu'ils sont rattachés à un (premier) réseau visité (RC1, RA1), différent de leur (second) réseau d'appartenance (RC2, RA2).

Les contrôleurs de réseau radio BSCj sont chargés de gérer l'allocation des ressources ou canaux logiques du réseau (tels que les canaux de liaison radio ou les codes de canalisation) en vue de l'établissement de services entre les terminaux mobiles Tni et les réseaux de coeur RCi. Un service constitue par exemple une connexion pouvant être utilisée pour la transmission de données entre un réseau mobile et un terminal mobile Tni, ou bien pour une communication vocale (appel téléphonique), ou encore pour la transmission d'un message court de type SMS point-à-point ou SMS-CB.

Chaque réseau de coeur RCi comprend des équipements de réseau raccordés aux contrôleurs de réseau radio BSCj et à d'autres réseaux de communication externes, publics et/ou privés, comme par exemple le réseau Internet. Cela permet notamment aux clients d'un réseau mobile, d'une part, d'accéder à des terminaux ou serveurs externes, au moyen de leurs propres terminaux mobiles, et d'autre part, d'accéder à leur réseau mobile d'appartenance via le réseau d'accès radio d'un réseau mobile visité.

Le raccordement à un réseau externe est assuré par un routeur ou noeud de type GGSN (« Gateway GPRS Support Node »), généralement sous le contrôle d'un noeud de type SGSN (« Serving GPRS Support Node ») Si.

Chaque réseau de coeur RCi comprend par ailleurs un centre de gestion d'appels (ou MSC pour « Mobile Service Switching Centre ») Mi chargé de gérer les commutations de communication (ou d'appel) de type circuit (ou CS). Ce centre MSC traite notamment les procédures de changement de cellules ou « handovers ». Il est connecté à une base de données de souscription appelée HLR (pour « Home Location Register ») HLi, qui fait généralement partie d'un serveur d'informations de souscription d'abonnés appelé HSS (pour « Home Subscriber Server ») HSi, afin de récupérer des informations sur les abonnés (ou clients) et d'y stocker les adresses et positions connues desdits abonnés. Par ailleurs, le centre MSC comprend une mémoire (ou base de données) appelée VLR (pour « Visitor Location Register ») dans laquelle il stocke les données relatives à chaque terminal Tni connecté à son réseau d'accès radio RAi.

Afin de permettre la transmission de messages d'alarme en urgence à des terminaux mobiles Tni situés dans au moins une cellule choisie Cjk, en cas de prévision d'une catastrophe imminente, naturelle ou non, dans au moins une zone géographique donnée Z, contenant au moins en partie chaque cellule choisie Cjk, l'invention propose de raccorder au moins un centre d'alarme CA à l'un au moins des réseaux mobiles (ici au second) et d'intégrer un module de traitement MT dans chaque contrôleur de réseau radio BSCj.

Le centre d'alarme CA comprend un module de traitement MT' chargé, chaque fois qu'est déclenchée une alarme, relative à une prévision de catastrophe imminente (comme par exemple un tremblement de terre, un raz-de-marée (ou « tsunami »), une tornade, une éruption volcanique, un risque d'explosion ou un risque de pollution), de générer un premier message court de type SMS-CB (pour « Short Message System-Cell Broadcast service » - défini par la spécification 23.041 du 3GPP), associé à une classe d'alarme choisie de niveau de priorité choisi, contenant un message textuel d'alarme et destiné aux terminaux mobiles Tni qui sont situés dans au moins une zone géographique donnée Z, contenant au moins en partie une ou plusieurs cellules choisies Cjk. Dans l'exemple non limitatif illustré sur l'unique figure, la zone géographique Z englobe les deux cellules C11 et C12, rattachées au premier contrôleur de réseau radio BSC1 du réseau d'accès radio RA1 du premier réseau mobile, et la cellule C21, rattachée au second contrôleur de réseau radio BSC2 dudit réseau d'accès radio RA1.

On entend ici par « message textuel d'alarme » une ou plusieurs phrases et/ou une icône dédiée. Dans le cas de pays multilingues et/ou touristiques, et afin de prendre en compte les personnes dites « roamers » venant d'autres pays, chaque phrase peut être par exemple en différentes langues, et l'une des phrases peut par exemple être toujours en anglais.

L'invention associe donc un niveau de priorité à chaque classe de message court de type SMS-CB, permettant ainsi de rendre prioritaire une classe, par exemple d'alarme, par rapport à une ou plusieurs autres classes (d'alarme ou non).

Le centre d'alarme CA transmet chaque premier message court, de type SMS-CB, qu'il a généré, à chaque contrôleur de réseau radio (ici BSC1 et BSC2) contrôlant l'une au moins des cellules Cjk dans lesquelles il doit être diffusé aux terminaux mobiles Tni qui y sont momentanément rattachés.

Lorsqu'un contrôleur de réseau radio (BSC1 ou BSC2) reçoit un premier message court (de type SMS-CB), il le transmet à son module de traitement MT si la classe de ce message SMS-CB est une classe d'alarme.

Puis, le module de traitement MT du contrôleur de réseau radio (par exemple BSC1) interrompt immédiatement la transmission, vers les terminaux mobiles Tni qui sont situés dans chaque cellule choisie Cjk qu'il contrôle, de tout message court de type SMS-CB associé à une classe d'alarme de niveau de priorité inférieur à celui de la classe d'alarme choisie du premier message SMS-CB reçu. Cela permet en effet de libérer des ressources pour la diffusion des premiers messages (SMS-CB) d'alarme.

Par conséquent, le module de traitement MT du contrôleur de réseau radio (par exemple BSC1) peut être configuré par l'opérateur du réseau de manière à interrompre la transmission vers les terminaux mobiles Tni, qui sont situés dans chaque cellule choisie Cjk, de tout message de type SMS-CB associé à une classe dont le niveau de priorité est inférieur à celui de la classe d'alarme choisie. On peut également envisager de définir des sous-niveaux de priorité au sein d'une classe d'alarme de niveau de priorité choisi. Dans ce cas, le module de traitement MT du contrôleur de réseau radio (par exemple BSC1) peut être configuré par l'opérateur du réseau de manière à interrompre la transmission vers les terminaux mobiles Tni, qui sont situés dans chaque cellule choisie Cjk, de tout message de type SMS-CB associé à une classe dont le niveau de priorité est inférieur à celui de la classe d'alarme choisie, et au sein de cette classe d'alarme choisie à interrompre la transmission vers les terminaux mobiles Tni, qui sont situés dans chaque cellule choisie Cjk, de tout message de type SMS-CB associé à un sous-niveau de priorité inférieur à un sous-niveau choisi.

Puis, le module de traitement MT du contrôleur de réseau radio BSC1 diffuse le premier message à destination de tous les terminaux mobiles Tni (ici T11, T21, et T12) situés dans les cellules choisies C11 et C12 qu'il contrôle (et qui font partie de la zone géographique Z). A noter que le module de traitement MT du contrôleur de réseau radio BSC2 diffuse également le premier message à destination de tous les terminaux mobiles Tni (ici T31 et T22) situés dans la cellule choisie C21 qu'il contrôle (et qui fait également partie de la zone géographique Z).

II est important de noter que ce sont essentiellement les terminaux mobiles Tni qui sont placés dans un mode de veille (ou « Idle ») qui sont en mesure de recevoir le premier message de type SMS-CB.

Lorsqu'un terminal mobile Tni reçoit le premier message, il analyse son contenu. Ledit contenu requérant l'émission d'une alarme et l'affichage d'un message textuel d'alarme sur l'écran SC du terminal mobile Tni, ce dernier s'exécute.

Il est rappelé que les terminaux mobiles Tni, comme par exemple les téléphones mobiles, comprennent habituellement un module de contrôle MC couplé à une carte d'identification de type SIM (pour « Subscriber Identification Module ») CS. Cette carte SIM CS peut, lorsqu'elle répond à un standard tel que SAT (pour « SIM Application Toolkit »), défini par la spécification 31.111 ou 11.14 du 3GPP, prendre le contrôle au moins partiel du module de contrôle MC au moyen de commandes spécifiques.

Par conséquent, lorsqu'un terminal mobile Tni, équipé d'une carte de type SIM CS répondant à un standard de type SAT, reçoit un premier message, il le transmet à sa carte de type SIM CS, qui prend alors le contrôle de son module de contrôle MC en lui transmettant des commandes spécifiques, telles que, par exemple, « DISPLAY TEXT » et « PLAY TONE », qui lui ordonnent de procéder à l'émission de l'alarme et à l'affichage du message textuel d'alarme sur l'écran SC de son terminal mobile Tni.

L'utilisation de la commande DISPLAY TEXT permet à la carte de type SIM CS de définir un éventuel niveau de priorité d'affichage ainsi qu'un format d'affichage particulier pour le message textuel d'alarme. Par exemple, un message textuel d'alarme associé à une priorité de niveau haut est affiché sur l'écran SC à la place de tout autre texte en cours d'affichage ou dans une fenêtre superposée au dessus d'un texte en cours d'affichage ou d'une ou plusieurs fenêtres.

Les moyens utilisés pour émettre le signal d'alarme et le mode d'affichage du message textuel d'alarme dépendent de l'état dans lequel se trouve le terminal mobile Tni. Deux cas doivent en effet être envisagés selon que le terminal mobile Tni a initié ou non l'établissement d'une communication vocale.

Si le terminal mobile Tni est en train d'établir une communication vocale, alors la carte de type SIM CS ordonne au module de contrôle MC de superposer le signal d'alarme audio à l'éventuelle liaison audio descendante. L'utilisateur du terminal est alors alerté par les moyens de diffusion sonore du terminal mobile Tni, par exemple son haut-parleur ou le haut-parleur d'un kit « main-libre », ou une oreillette couplée au terminal mobile Tni. Le message textuel d'alarme est par exemple affiché sur l'écran SC au dessus ou à la place du numéro appelant et/ou du numéro appelé.

Si le terminal mobile Tni n'est pas en train d'établir une communication vocale, alors le module de contrôle MC procède sensiblement simultanément, d'une part, à l'émission du signal d'alarme audio avec les moyens de diffusion sonore du terminal mobile Tni, par exemple son haut-parleur ou le haut-parleur d'un kit « main-libre », ou une oreillette couplée au terminal mobile Tni, et d'autre part, à l'affichage du message textuel d'alarme sur l'écran SC.

Si un terminal mobile Tni reçoit un premier message mais qu'il n'est pas équipé d'une carte de type SIM CS répondant à un standard de type SAT, il le transmet à son module de contrôle MC afin qu'il le traite.

Il est important de noter qu'un même premier message (de type SMS-CB) peut être transmis aux terminaux mobiles Tni un nombre choisi de fois (par exemple cinq ou six fois), par le(s) contrôleur(s) de réseau radio BSCj concerné(s). Ces transmissions successives peuvent se faire par exemple toutes les minutes ou toutes les 30 secondes.

Par ailleurs, on peut envisager que dans une variante le module de traitement MT de chaque contrôleur de réseau radio BSCj soit agencé, lors d'une première tentative de transmission d'un premier message SMS-CB vers des terminaux mobiles Tni, de manière à libérer (ou relâcher) toutes les ressources radio qui sont utilisées par les terminaux mobiles impliqués dans une communication et situés dans chaque cellule choisie Cjk que son contrôleur BSCj contrôle.

Grâce à un tel mécanisme de relâchement, les terminaux mobiles sont forcés de repasser en mode de veille (ou « idle ») dans lequel ils sont en mesure de recevoir un premier message (de type SMS-CB).

II est préférable de ne mettre en oeuvre ce relâchement forcé des ressources radio que lors de chaque première tentative de transmission d'un premier message. En effet, si ce mécanisme était effectué systématiquement des communications entre des membres des équipes d'intervention et/ou d'urgence, situés dans la ou les zones d'alerte, pourraient être interrompues.

Les étapes qui ont été décrites précédemment ne permettent de transmettre un premier message d'alarme (de type SMS-CB) qu'essentiellement à des terminaux mobiles Tni qui sont en mode de veille (ou idle). Pour ceux qui ne sont pas en mode de veille (c'est-à-dire ceux ayant établi une communication avec le réseau (« dedicated mode »)) la première tentative de transmission d'un premier message SMS-CB a échoué. Afin de les alerter malgré tout, l'invention propose de mettre en oeuvre des étapes complémentaires.

A cet effet, le module de traitement MT est chargé de déterminer un premier identifiants radio d'abonné pour chaque terminal mobile Tni qui n'a pas pu recevoir le premier message. Les premiers identifiants sont connus du contrôleur de réseau radio (par exemple BSC1). II les a en effet reçus d'un noeud du réseau de coeur. II s'agit par exemple de l'identifiant d'identité internationale d'un abonné mobile appelé IMSI (pour « International mobile Station Identity »).

Une fois que le module de traitement MT d'un contrôleur de réseau radio (par exemple BSC1) dispose des premiers identifiants des terminaux mobiles Tni concernés par la seconde situation, au moins deux modes de réalisation peuvent être envisagés de manière à leur transmettre un second message de type SMS point-à-point contenant un message textuel d'alarme destiné à être affiché sur leur écran SC.

Dans un premier mode de réalisation, chaque module de traitement MT est agencé de manière à transmettre les premiers identifiants qu'il a déterminés au centre d'alarme CA. Ce dernier est alors chargé de déterminer un second identifiant de communication pour chaque terminal mobile Tni, désigné par un premier identifiant reçu, auprès de la base de données d'informations clients (par exemple de type HSS) HSi de son réseau de rattachement. Par exemple, chaque second identifiant de communication est ce que l'homme de l'art appelle MSISDN (pour « Mobile station ISDN - numéro de type RNIS de l'abonné mobile, comme par exemple 06 81 88 76 58).

Afin d'optimiser l'envoi des seconds messages aux terminaux mobiles Tni, on peut définir une nouvelle opération de type MAP (pour « Mobile Application Part » - partie d'application mobile), permettant de déterminer en une seule opération les seconds identifiants de communication desdits terminaux mobiles Tni et les informations de routage permettant de les atteindre via un SMS point-à-point. Il est rappelé que les interfaces de type MAP permettent d'obtenir des services auprès des mémoires HLR HLi contenues dans les serveurs HSS HSi.

Une fois que le module de traitement MT' du centre d'alarme CA est en possession des seconds identifiants de communication (par exemple les MSISDNs) des terminaux mobiles Tni, il génère et transmet un second message à destination de chacun d'entre eux. Le second message qui est utilisé dans la seconde situation est un message court de type SMS point-à-point qui comprend essentiellement un message textuel d'alarme destiné à être affiché sur l'écran SC de chaque terminal mobile destinataire.

Dans un second mode de réalisation, le module de traitement MT de chaque contrôleur de réseau radio BSCj est agencé de manière à générer un second message à partir des données représentatives du message textuel d'alarme, contenues dans le premier message reçu. Comme dans le premier cas, le second message est un message court de type SMS point-à-point qui comprend essentiellement un message textuel d'alarme destiné à être affiché sur l'écran SC de chaque terminal mobile destinataire Tni. Une fois le second message généré, le module de traitement MT le transmet à destination de chaque terminal mobile Tni dont il a déterminé le second identifiant de communication d'une façon similaire à celle du centre d'alarme CA.

Dans le premier mode de réalisation comme dans le second, lorsqu'un terminal mobile Tni reçoit un second message, il le traite comme tout autre message court de type SMS point-à-point. Par conséquent, son arrivée peut être signalée à l'utilisateur par un signal audio, éventuellement superposé à la liaison audio descendante de la communication vocale en cours. Pour ce faire, le terminal mobile Tni utilise ses moyens de diffusion sonore, par exemple son haut-parleur ou le haut-parleur d'un kit « main-libre », ou une oreillette.

L'utilisateur doit alors se servir du menu de son terminal mobile Tni pour afficher le message textuel d'alarme sur l'écran SC.

Le module de traitement MT des contrôleurs de réseau radio BSCj selon l'invention peut être réalisé sous la forme de circuits électroniques, de modules logiciels (ou informatiques), ou d'une combinaison de circuits et de logiciels .

L'invention présente un certain nombre d'avantages par rapport aux solutions de l'art antérieur, et notamment :
- l'utilisation dans la première situation de messages courts de type SMS-CB permet de joindre très rapidement des terminaux mobiles et requiert très peu de ressources, laissant ainsi des ressources disponibles pour des communications essentielles et/ou prioritaires,
- les utilisateurs, dont les terminaux mobiles reçoivent des messages courts de type SMS-CB, sont désormais alertés de l'arrivée de tels messages par un signal d'alarme sonore,
- aucune adaptation ou modification des terminaux mobiles ne doit être effectuée, dès lors que leur carte de type SIM satisfait à un standard de type SAT,
- l'envoi dans la seconde situation de messages courts de type SMS point-à-point à un nombre restreint de terminaux mobiles permet de ne pas saturer les capacités de signalisation des réseaux, et donc permet leur acheminement dans de brefs délais,
- les messages courts de type SMS point-à-point pouvant être transmis à des terminaux mobiles alors même qu'ils ont déjà établi une communication vocale ou un transfert GPRS de données, leurs destinataires ne peuvent pas les manquer.

L'invention ne se limite pas aux modes de réalisation de contrôleur de réseau radio BSCj et de procédé de transmission de messages d'alarme décrits ci-avant, seulement à titre d'exemple, mais elle englobe toutes les variantes que pourra envisager l'homme de l'art dans le cadre des revendications ci-après.

## Revendications

1. Procédé de transmission de messages d'alarme dans un réseau de communication radio comportant un réseau d'accès radio (RAi) contrôlant les communications de terminaux mobiles (Tni) situés dans des cellules radio (Cjk), **caractérisé en ce qu'**il consiste à effectuer les étapes suivantes :
- a) générer dans un centre d'alarme (CA) un premier message de type SMS-CB, associé à une classe d'alarme choisie de niveau choisi, contenant un message textuel d'alarme et destiné à des terminaux mobiles (Tni) situés dans au moins une cellule choisie (Cjk),
- b) transmettre ledit premier message audit réseau d'accès radio (RAi),
- c) interrompre au moyen dudit réseau d'accès radio (RAi) la transmission vers les terminaux mobiles (Tni) situés dans chaque cellule choisie (Cjk) de tout message de type SMS-CB associé à une classe de niveau inférieur au niveau choisi de ladite classe d'alarme choisie,
- d) diffuser ledit premier message aux terminaux mobiles (Tni) situés dans chaque cellule choisie (Cjk), au moyen du réseau d'accès radio (RAi), et
- e) émettre un signal d'alarme et afficher un message textuel d'alarme au niveau de chaque terminal mobile (Tni) ayant reçu ledit premier message.

2. Procédé selon la revendication 1, **caractérisé en ce qu'**en présence d'un terminal mobile (Tni) comprenant une carte d'identification de type SIM (CS) agencée pour prendre son contrôle au moyen de commandes spécifiques, ledit terminal mobile (Tni) transmet à ladite carte d'identification (CS) tout premier message reçu afin que cette carte (CS) génère des commandes spécifiques destinées à ordonner à son terminal mobile (Tni) d'émettre ledit signal d'alarme et d'afficher ledit message textuel d'alarme.

3. Procédé selon l'une des revendications 1 et 2, **caractérisé en ce qu'**en cas de réception d'un premier message par un terminal mobile (Tni) en cours d'établissement d'une communication vocale, on superpose à l'étape e) ledit signal d'alarme audio à une éventuelle liaison audio descendante.

4. Procédé selon l'une des revendications 1 et 2, **caractérisé en ce qu'**en cas de réception d'un premier message par un terminal mobile (Tni) n'ayant pas initié d'établissement de communication vocale, on émet à l'étape e) ledit signal d'alarme audio avec des moyens de diffusion sonore dudit terminal mobile (Tni).

5. Procédé selon l'une des revendications 1 à 4, **caractérisé en ce que** l'on réitère les étapes a) à e) un nombre choisi de fois.

6. Procédé selon l'une des revendications 1 à 5, **caractérisé en ce que** pour une première tentative de transmission d'un premier message de type SMS-CB, on libère à l'étape c), au moyen dudit réseau d'accès radio (RAi), toutes les ressources radio utilisées par des terminaux mobiles (Tni) impliqués dans une communication et situés dans chaque cellule choisie (Cjk), de manière à forcer ces terminaux mobiles (Tni) à repasser en mode de veille.

7. Procédé selon l'une des revendications 1 à 6, **caractérisé en ce qu'**en cas d'échec d'une tentative de transmission d'un premier message de type SMS-CB pour des terminaux mobiles (Tni) ayant établi une communication avec ledit réseau et situés dans une cellule choisie (Cjk), on détermine dans une étape f), au moyen dudit réseau d'accès radio (RAi) des premiers identifiants pour chacun de ces terminaux mobiles (Tni), puis on génère dans une étape g) un second message de type SMS point-à-point, contenant un message textuel d'alarme, à partir dudit premier message, et on transmet dans une étape h) ledit second message à chaque terminal mobile détecté (Tni) afin que le message textuel d'alarme qu'il contient puisse être affiché sur un écran dudit terminal mobile (Tni).

8. Procédé selon la revendication 7, **caractérisé en ce qu'**à l'étape g) ledit réseau d'accès radio (RAi) transmet audit centre d'alarme (CA) lesdits premiers identifiants des terminaux d'abonnés ayant établi une communication, afin que ledit centre d'alarme (CA) génère un second message de type SMS point-à-point, puis qu'il détermine à l'étape h) un second identifiant auprès de chaque base de données d'informations clients (HSi) du réseau de rattachement de chaque terminal mobile (Tni) désigné par un premier identifiant, et qu'il transmette ledit second message à destination de chaque terminal mobile (Tni) désigné par un second identifiant.

9. Procédé selon la revendication 7, **caractérisé en ce que** ledit réseau d'accès radio (RAi) détermine à l'étape h) un second identifiant auprès de chaque base de données d'informations clients (HSi) du réseau de rattachement de chaque terminal mobile (Tni) désigné par un premier identifiant, puis transmet ledit second message à destination de chaque terminal mobile (Tni) désigné par un second identifiant.

10. Procédé selon l'une des revendications 7 à 9, **caractérisé en ce qu'**en présence d'un terminal mobile (Tni) comprenant une carte d'identification de type SIM (CS) agencée pour prendre son contrôle au moyen de commandes spécifiques, ledit terminal mobile (Tni) transmet à ladite carte d'identification (CS) tout second message de type SMS point à point reçu afin que ladite carte (CS) génère des commandes spécifiques destinées à ordonner à son terminal mobile (Tni) d'émettre ledit signal d'alarme et d'afficher ledit message textuel d'alarme.

11. Procédé selon l'une des revendications 7 à 10, **caractérisé en ce qu'**à l'étape h) on détermine en une seule opération auprès de ladite base de données d'informations clients (HSi) lesdits seconds identifiants desdits terminaux mobiles (Tni) et des informations de routage permettant d'atteindre ces terminaux (Tni) via un second message de type SMS point-à-point, à partir desdits premiers identifiants desdits terminaux mobiles (Tni).

12. Contrôleur de réseau radio (BSCj), pour un réseau d'accès radio (RAi) d'un réseau de communication radio, propre à contrôler des communications de terminaux mobiles (Tni) situés dans des cellules radio (Cjk), **caractérisé en ce qu'**il comprend des moyens de traitement (MT) agencés, en cas de réception en provenance d'un centre d'alarme (CA) d'un premier message de type SMS-CB, associé à une classe d'alarme choisie de niveau choisi, contenant un message textuel d'alarme et destiné à des terminaux mobiles (Tni) situés dans au moins une cellule choisie que ledit contrôleur (BSCj) contrôle, pour interrompre la transmission vers les terminaux mobiles (Tni), situés dans chaque cellule choisie (Cjk) de tout message de type SMS-CB associé à une classe de niveau inférieur au niveau choisi de ladite classe d'alarme choisie, afin que ledit premier message puisse être diffusé aux terminaux mobiles (Tni) qui sont situés dans chaque cellule choisie que ledit contrôleur (BSCj) contrôle et que certains au moins de ces terminaux mobiles (Tni) émettent un signal d'alarme et affichent le message textuel d'alarme contenu dans ledit premier message.

13. Contrôleur de réseau radio selon la revendication 12, **caractérisé en ce que** lesdits moyens de traitement (MT) sont agencés pour réitérer l'envoi d'un premier message un nombre choisi de fois.

14. Contrôleur de réseau radio selon l'une des revendications 12 et 13, **caractérisé en ce que** lesdits moyens de traitement (MT) sont agencés, lors d'une première tentative de transmission d'un premier message de type SMS-CB, pour libérer toutes les ressources radio utilisées par des terminaux mobiles (Tni) impliqués dans une communication et situés dans chaque cellule choisie que ledit contrôleur contrôle, de manière à forcer ces terminaux mobiles (Tni) à passer dans un mode de veille.

15. Contrôleur de réseau radio selon l'une des revendications 12 à 14, **caractérisé en ce que** lesdits moyens de traitement (MT) sont agencés, en cas d'échec de transmission d'un premier message de type SMS-CB à des terminaux mobiles (Tni) ayant établi une communication avec ledit réseau et qui sont situés dans une cellule choisie (Cjk) que ledit contrôleur (BSCj) contrôle, pour déterminer des premiers identifiants pour chacun de ces terminaux mobiles (Tni), puis pour générer un second message de type SMS point-à-point, contenant un message textuel d'alarme, à partir dudit premier message, puis pour déterminer un second identifiant de communication pour chacun desdits terminaux mobiles détectés (Tni) à partir desdits premiers identifiants, et pour transmettre ledit second message à chaque terminal mobile détecté (Tni) afin que le message textuel d'alarme qu'il contient puisse être affiché sur l'écran (SC) dudit terminal mobile détecté (Tni).

16. Contrôleur de réseau radio selon l'une des revendications 12 à 14, **caractérisé en ce que** lesdits moyens de traitement (MT) sont agencés, en cas d'échec de transmission d'un premier message de type SMS-CB à des terminaux mobiles (Tni) ayant établi une communication avec ledit réseau et qui sont situés dans une cellule choisie (Cjk) que ledit contrôleur (BSCj) contrôle, pour déterminer des premiers identifiants pour chacun de ces terminaux mobiles (Tni), puis pour transmettre audit centre d'alarme (CA) lesdits premiers identifiants afin qu'il génère un second message de type SMS point-à-point et qu'il transmette ce second message vers chacun desdits terminaux mobiles détectés (Tni), après avoir déterminé des seconds identifiants de communication pour lesdits terminaux mobiles détectés (Tni), à partir de leurs premiers identifiants respectifs.

17. Centre d'alarme (CA), **caractérisé en ce qu'**il comprend des moyens de traitement (MT') agencés pour transmettre à des contrôleurs de réseau radio choisis (BSCj), selon l'une des revendications 12 à 16, un premier message de type SMS-CB, et, en cas de réception en provenance de l'un au moins desdits contrôleurs de réseau radio de premiers identifiants de terminaux mobiles (Tni) n'ayant pas pu être joints par ledit premier message de type SMS-CB, pour générer un second message de type SMS point-à-point puis transmettre ce dernier vers chacun desdits terminaux mobiles non joints (Tni), après avoir déterminé des seconds identifiants de communication de SMS point à point pour ces terminaux mobiles (Tni), à partir de leurs premiers identifiants radio respectifs.

## Claims

1. A method for transmitting alarm messages within a radio communication network comprising a radio access network (RAi) controlling the communications of mobile terminals (Tni) located within radio cells (Cjk), **characterized in that** it consists of carrying out the following steps:
- a) generating within an alarm center (CA) a first SMS-CB message, associated with an alarm class having a chosen level, containing a text-based alarm message and intended for mobile terminals (Tni) located within at least one chosen cell (Cjk),
- b) transmitting said first message to said radio access network (RAi),
- c) by means of said radio access network (RAi), interrupting the transmission, to mobile terminals (Tni) located within each chosen cell (Cjk), of every SMS-CB message associated with a class having a lower level than the chosen level of said chosen alarm class,
- d) broadcasting said first message to the mobile terminals (Tni) located within each chosen cell (Cjk), by means of the radio access network (RAi), and
- e) emitting an alarm signal and displaying a text-based alarm message on each mobile terminal (Tni) that received said first message.

2. A method according to claim 1, **characterized in that** in the presence of a mobile terminal (Tni) comprising a SIM identification card (CS) adapted for taking control of it using special commands, said mobile terminal (Tni) transmits to set identification card (CS) any first message received in order for that card (CS) to generate special commands intended to order its mobile terminal (Tni) to emit said alarm signal and display said text-based alarm message.

3. A method according to one of claims 1 and 2, **characterized in that** if a first message is received by a mobile terminal (Tni) while establishing a voice communication, said audio alarm signal is superimposed onto a potentially existing audio downlink in step e).

4. A method according to one of claims 1 and 2, **characterized in that** if a first message is received by a mobile terminal (Tni) that did not initiate the establishment of voice communication, said audio alarm signal is emitted with the sound broadcasting means of said mobile terminal (Tni) in step e).

5. A method according to one of claims 1 to 4, **characterized in that** steps a) to e) are repeated a chosen number of times.

6. A method according to one of claims 1 to 5, **characterized in that** for a first attempt at transmitting a first SMS-CB message, all the radio resources used by mobile terminals (Tni) involved in a communication and located within each chosen cell (Cjk) are released by means of said radio access network (RAi) in step c), so as to force these mobile terminals (Tni) to return to standby mode.

7. A method according to one of claims 1 to 6, **characterized** that if an attempt at transmitting a first SMS-CB message for mobile terminals (Tni) that had established a communication with said network and are located within a chosen cell (Cjk) were to fail, then in a step f), first identifiers for each of these mobile terminals (Tni) are determined by means of said radio access network (RAi), then within a step g) a second point-to-point SMS message is generated, containing a text-based alarm message, based on said first message, and then during a step h) said second message is transmitted to each detected mobile terminal (Tni) so that the text-based alarm message that it contains can be displayed on a screen of said mobile terminal (Tni).

8. A method according to claim 7, **characterized in that** in step g) said radio access network (RAi) transmits to said alarm center (CA) said first identifiers of subscriber terminals that have established a communication, in order for said alarm center (CA) to generate a second point-to-point SMS message, then for it to determine in step h) a second identifier from each client information database (HSi) of the network to which each mobile terminal (Tni) designated by a first identifier belongs, and for it to transmit said second message to each mobile terminal (Tni) designated by a second identifier.

9. A method according to claim 7, **characterized in that** said radio access network (RAi) determines in step h) a second identifier from each client information database (HSi) of the network to which each mobile terminal (Tni) designated by a first identifier belongs, then transmits said second message to each mobile terminal (Tni) designated by a second identifier.

10. A method according to one of claims 7 to 9, **characterized in that** in the presence of a mobile terminal (Tni) comprising a SIM identification card (CS) adapted for taking control of it by means of special commands, said mobile terminal (Tni) transmits to said identification card (CS) any second point-to-point SMS message received so that said card (CS) generates special commands intended to order its mobile terminal (Tni) to transmit said alarm signal and to transmit said alarm signal and to display said text-based alarm message.

11. A method according to one of claims 7 to 10, **characterized in that** in step h) in a single operation, said second identifiers of said mobile terminals (Tni) and routing information used to reach these terminals (Tni) via a second point-to-point SMS message are determined in a single operation from said database, based on said first identifiers of said mobile terminals (Tni).

12. A radio network controller (BSCj), for a radio access network (RAi) of a radio communication network, capable of controlling communications of mobile terminals (Tni) located within radio cells (Cjk), **characterized in that** it comprises processing means (MT) configured, whenever a first SMS-CB message associated with a chosen alarm class of a chosen level, containing a text-based alarm message and intended for mobile terminals (Tni) located within at least one chosen cell that said controller (BSCj) controls, is received from an alarm center (CA), to interrupt the transmission to the mobile terminals (Tni) located within each chosen cell (Cjk) of every SMS-CB message associated with a class whose level is less than the chosen level of said chosen alarm class, so that said first message can be distributed to the mobile terminals (Tni) which are located within each chosen cell that said controller (BSCj) controls, and that at least some of these mobile terminals (Tni) transmit an alarm signal and display the text-based alarm message contained within said first message.

13. A radio network controller according to claim 12, **characterized in that** said processing means (MT) are adapted for repeating the sending of a first message a chosen number of times.

14. A radio network controller according to one of the claims 12 and 13, **characterized in that** said processing means (MT) are configured, during a first attempt at transmitting a first SMS-CB mesage, to release all of the radio resources used by mobile terminals (Tni) involved in a communication and located within each chosen cell that said controller controls, so as to force these mobile terminals (Tni) to switch to a standby mode.

15. A radio network controller according to one of the claims 12 to 14, **characterized in that** said processing means (MT) are configured, in the event that the transmission of a first SMS-CB message to mobile terminals (Tni) that have established a communication with said network and which are located within a chosen cell (Cjk) that said controller (BSCj) controls were to fail, to determine first identifiers for each of these mobile terminals (Tni), then to generate a second point-to-point SMS message containing a text-based alarm message based on said first message, then to determine a second communication identifier for each of said detected mobile terminals (Tni) based on said first identifiers, and to transmit said second message to each detected mobile terminal (Tni) so that the text-based alarm message that it contains can be displayed on the screen (SC) of said detected mobile terminal (Tni).

16. A radio network controller according to one of claims 12 to 14, **characterized in that** the processing means (MT) are configured, in the event that the transmission of a first SMS-CB message to mobile terminals (Tni) that have established a communication with said network and which are located within a chosen cell (Cjk) that said controller (BSCj) controls were to fail, to determine first identifiers for each of these mobile terminals (Tni), then to transmit to said alarm center (CA) said first identifiers so that it will generate a second point-to-point SMS message and transmit that second message to each of said detected mobile terminals (Tni), after having determined second communication identifiers for said detected mobile terminals (Tni), based on their respective first identifiers.

17. An alarm center (CA), **characterized in that** it comprises processing means (MT') adapted for transmitting to chosen radio network controllers (BSCj) according to one of claims 12 to 16, a first SMS-CB method, and, if first identifiers of mobile terminals (Tni) that could not be reached by said first SMS-CB message are received from at least one of said radio network controllers, for generating a second point-to-point SMS message and transmit that second message to each of said unreached mobile terminals (Tni), after having determined second point-to-point SMS communication identifiers for these mobile terminals (Tni), based on their respective first identifiers.

## Patentansprüche

1. Verfahren zur Übertragung von Alarmnachrichten in einem Funkkommunikationsnetzwerk mit einem Funkzugangsnetzwerk (RAi), welches die Verbindungen von sich in Funkzellen (Cjk) aufhaltenden Mobilendgeräten (Tni) steuert, **dadurch gekennzeichnet, dass** es darin besteht, die folgenden Schritte durchzuführen:
- a) Erzeugen, in einer Alarmzentrale (CA), einer ersten Nachricht vom Typ SMS-CB, welche einer ausgewählten Alarmklasse einer ausgewählten Stufe zugeordnet ist und eine Text-Alarmnachricht enthält und für sich in mindestens einer ausgewählten Zelle (Cjk) aufhaltende Mobilendgeräte (Tni) bestimmt ist;
- b) Übertragen der besagten ersten Nachricht an das besagte Funkzugangsnetzwerk (RAi),
- c) Unterbrechen, anhand des besagten Funkzugangsnetzwerks (RAi), der Übertragung aller einer niedrigeren Stufe als die ausgewählte Stufe der der ausgewählten Alarmklasse zugeordneten Nachrichten vom Typ SMS-CB an die sich in jeder ausgewählten Zelle (Cjk) aufhaltenden Mobilendgeräte (Tni),
- d) Senden der besagten ersten Nachricht an die sich in jeder ausgewählten Zelle (Cjk) aufhaltenden Mobilendgeräte (Tni) anhand des Funkzugangsnetzwerks (RAi), und
- e) Aussenden eines Alarmsignals und Anzeigen einer Text-Alarmnachricht an jedem Mobilendgerät (Tni), welches die besagte erste Nachricht empfangen hat.

2. Verfahren nach Anspruch 1, **dadurch gekennzeichnet, dass** in Gegenwart eines Mobilendgeräts (Tni) mit einer Teilnehmer-Identifikationskarte vom Typ SIM (CS), welche dazu bestimmt ist, dieses anhand von spezifischen Befehlen zu steuern, das besagte Mobilendgerät (Tni) jede empfangene erste Nachricht an die besagte Teilnehmer-Identifikationskarte (CS) weiterzuleiten, damit diese Karte (CS) spezifische Befehle erzeugt, welche dazu bestimmt sind, ihr Mobilendgerät (Tni) anzuweisen, das besagte Alarmsignal auszusenden und die besagte Text-Alarmnachricht anzuzeigen.

3. Verfahren nach einem der Ansprüche 1 und 2, **dadurch gekennzeichnet, dass** man im Fall des Empfangs einer ersten Nachricht an einem Mobilendgerät (Tni), für welches sich eine Sprachverbindung im Aufbau befindet, in Schritt e) das besagte Audio-Alarmsignal einer eventuellen Audioverbindung in Abwärtsrichtung überlagert wird.

4. Verfahren nach einem der Ansprüche 1 und 2, **dadurch gekennzeichnet, dass** man im Fall des Empfangs einer ersten Nachricht am Mobilendgerät (Tni), welche keinen Aufbau einer Sprachverbindung initiiert hat, in Schritt e) das besagte Audio-Alarmsignal anhand von akustischen Ausgabemitteln des besagten Mobilendgeräts (Tni) aussendet.

5. Verfahren nach einem der Ansprüche 1 bis 4, **dadurch gekennzeichnet, dass** man die Schritte a) bis e) eine ausgewählte Anzahl von Malen wiederholt.

6. Verfahren nach einem der Ansprüche 1 bis 5, **dadurch gekennzeichnet, dass** man für einen ersten Übertragungsversuch einer ersten Nachricht vom Typ SMS-CB in Schritt c) anhand des besagten Funkzugangsnetzwerks (RAi) alle von den an einer Verbindung beteiligten und sich in jeder ausgewählten Zelle (Cjk) aufhaltenden Mobilendgeräten (Tni) benutzten Funkressourcen freigibt, so dass diese Mobilendgeräte gezwungen (Tni) werden, in den Standby-Modus zurückzukehren.

7. Verfahren nach einem der Ansprüche 1 bis 6, **dadurch gekennzeichnet, dass** man im Fall des Scheiterns eines Übertragungsversuchs einer ersten Nachricht vom Typ SCMS-CB für Mobilendgeräte (Tni), welche eine Verbindung mit dem besagten Netzwerk aufgebaut haben und sich in einer ausgewählten Zelle (Cjk) aufhalten, in einem Schritt f) anhand des besagten Funkzugangsnetzwerks (RAi) erste Kennungen für ein jedes dieser Mobilendgeräten (Tni) ermittelt und anschließend in einem Schritt g) eine zweite Nachricht vom Typ SMS Punkt-zu-Punkt, welche eine Text-Alarmnachricht enthält, ausgehend von der besagten ersten Nachricht erzeugt und in einem Schritt h) die besagte zweite Nachricht an jedes erkannte Mobilendgerät (Tni) überträgt, so dass die darin enthaltene Text-Alarmnachricht auf einem Display des besagten Mobilendgeräts (Tni) angezeigt werden kann.

8. Verfahren nach Anspruch 7, **dadurch gekennzeichnet, dass** das besagte Funkzugangsnetzwerk (RAi) in Schritt g) die besagten ersten Kennungen der Teilnehmerendgeräte, welche eine Verbindung aufgebaut haben, an die besagte Alarmzentrale (CA) überträgt, so dass die besagte Alarmzentrale (CA) eine zweite Nachricht vom Typ SMS Punkt-zu-Punkt erzeugt und anschließend in Schritt h) eine zweite Kennung in jeder Kundeninformationsdatenbank (HSi) des Heimatnetzes eines jeden von einer ersten Kennung benannten Mobilendgeräts (Tni) ermittelt, und dass es die besagte zweite Nachricht an jedes von der zweiten Kennung benannte Mobilendgerät (Tni) überträgt.

9. Verfahren nach Anspruch 7, **dadurch gekennzeichnet, dass** das besagte Funkzugangsnetzwerk (RAi) in Schritt h) eine zweite Kennung in jeder Kundeninformationsdatenbank (HSi) des Heimatnetzes eines jeden von einer ersten Kennung benannten Mobilendgeräts (Tni) ermittelt und die besagte zweite Nachricht anschließend an jedes von einer zweiten Kennung benannte Mobilendgerät (Tni) überträgt.

10. Verfahren nach einem der Ansprüche 7 bis 9, **dadurch gekennzeichnet, dass** in Gegenwart eines Mobilendgeräts (Tni), welches eine für dessen Steuerung anhand von spezifischen Befehlen ausgelegte Teilnehmer-Identifikationskarte vom Typ SIM (CS) umfasst, das besagte Mobilendgerät (Tni) alle empfangenen zweiten Nachrichten vom Typ SMS Punkt-zu-Punkt an die besagte Teilnehmer-Identifikationskarte (CS) überträgt, so dass die besagte Karte (CS) spezifische Befehle erzeugt, welche dazu bestimmt sind, ihr Mobilendgerät (Tni) anzuweisen, das besagte Alarmsignal auszusenden und die besagte Text-Alarmnachricht anzuzeigen.

11. Verfahren nach einem der Ansprüche 7 bis 10, **dadurch gekennzeichnet, dass** man in Schritt h) in einer einzigen Operation in der besagten Kundeninformationsdatenbank (HSi) die besagten zweiten Kennungen der besagten Mobilendgeräte (Tni) sowie Routing-Informationen, welche es ermöglichen, diese Endgeräte (Tni) über eine zweite Nachricht vom Typ SMS Punkt-zu-Punkt zu erreichen, ausgehend von den besagten ersten Kennungen der besagten Mobilgeräte (Tni) ermittelt.

12. Funknetzwerk-Controller (BSCj) für ein Funkzugangsnetzwerk (RAi) eines Funkkommunikationsnetzwerks, dazu ausgelegt, Verbindungen von sich in Funkzellen (Cjk) aufhaltenden Mobilendgeräten (Tni) zu steuern, **dadurch gekennzeichnet, dass** er Verarbeitungsmittel (MT) umfasst, welche dazu ausgelegt sind, bei Empfang einer von einer Alarmzentrale (CA) kommenden ersten Nachricht vom Typ SMS-CB, welche einer ausgewählten Alarmklasse einer ausgewählten Stufe zugeordnet ist und eine Text-Alarmnachricht enthält und für Mobilendgeräte (Tni), die sich in mindestens einer ausgewählten, von dem Controller (BSCj) gesteuerten Zelle aufhalten, bestimmt ist, die Übertragung von Nachrichten vom Typ SMS-CB, welche einer Klasse einer niedrigeren Stufe als die ausgewählte Stufe der besagten ausgewählten Alarmklasse zugeordnet sind, an die Mobilendgeräte (Tni), welche sich in jeder ausgewählten Zelle (Cjk) aufhalten, zu unterbrechen, so dass die besagte erste Nachricht an diejenigen Mobilendgeräte (Tni), die sich in jeder ausgewählten, von dem besagten Controller (BSCj) gesteuerten Zelle aufhalten, gesendet werden kann und zumindest bestimmte dieser Mobilendgeräte (Tni) ein Alarmsignal aussenden und die in der besagten ersten Nachricht enthaltene Text-Alarmnachricht anzeigen.

13. Funknetzwerk-Controller nach Anspruch 12, **dadurch gekennzeichnet, dass** die besagten Verarbeitungsmittel (MT) dazu ausgelegt sind, das Senden einer ersten Nachricht eine gewählte Anzahl von Malen zu wiederholen.

14. Funknetzwerk-Controller nach einem der Ansprüche 12 und 13, **dadurch gekennzeichnet, dass** die besagten Verarbeitungsmittel (MT) dazu ausgelegt sind, bei einem ersten Übertragungsversuch einer ersten Nachricht vom Typ SMS-CB alle von an einer Verbindung beteiligten und sich in jeder ausgewählten, von dem Controller gesteuerten Zelle aufhaltenden Mobilendgeräten (Tni) benutzten Funkressourcen freizugeben, so dass diese Mobilendgeräte (Tni) gezwungen werden, in einen Standby-Modus umzuschalten.

15. Funknetzwerk-Controller nach einem der Ansprüche 12 bis 14, **dadurch gekennzeichnet, dass** die besagten Verarbeitungsmittel (MT) dazu ausgelegt sind, im Fall des Scheiterns einer Übertragung einer ersten Nachricht vom Typ SMS-CB an Mobilendgeräte (Tni), welche eine Verbindung mit dem besagten Netzwerk aufgebaut haben und sich in einer ausgewählten, von dem besagten Controller (BSCj) gesteuerten Zelle aufhalten, erste Kennungen für ein jedes dieser Mobilendgeräte (Tni) zu ermitteln und anschließend eine zweite Nachricht vom Typ SMS Punkt-zu-Punkt, welche eine Text-Alarmnachricht enthält, ausgehend von der besagten ersten Nachricht zu erzeugen und anschließend eine zweite Verbindungskennung für ein jedes der besagten erkannten Mobilendgeräte (Tni) ausgehend von den besagten ersten Kennungen zu ermitteln, und die besagte zweite Nachricht an jedes erkannte Mobilendgerät (Tni) zu senden, so dass die darin enthaltene Text-Alarmnachricht im Display (SC) des besagten erkannten Mobilendgeräts (Tni) angezeigt werden kann.

16. Funknetzwerk-Controller nach einem der Ansprüche 12 bis 14, **dadurch gekennzeichnet, dass** die besagten Verarbeitungsmittel (MT) dazu ausgelegt sind, im Fall des Scheiterns einer Übertragung einer ersten Nachricht vom Typ SMS-CB an Mobilendgeräte (Tni), welche eine Verbindung mit dem besagten Netzwerk aufgebaut haben und sich in einer ausgewählten, von dem besagten Controller (BSCj) gesteuerten Zelle aufhalten, erste Kennungen für ein jedes dieser Mobilendgeräte (Tni) zu ermitteln und die besagten ersten Kennungen anschließend an die besagte Alarmzentrale (CA) zu übertragen, damit diese eine zweite Nachricht vom Typ SMS Punkt-zu-Punkt erzeugt und diese zweite Nachricht an ein jedes der erkannten Mobilendgeräte (Tni) sendet, nachdem sie ausgehend von deren jeweiligen ersten Kennungen zweite Verbindungskennungen für die besagten erkannten Mobilendgeräte (Tni) ermittelt hat.

17. Alarmzentrale (CA), **dadurch gekennzeichnet, dass** sie Verarbeitungsmittel (MT') umfasst, welche dazu ausgelegt sind, eine erste Nachricht vom Typ SMS-CB an ausgewählte Funknetzwerk-Controller (BSCj) nach einem der Ansprüche 12 bis 16 zu übertragen und im Fall des Empfangs von von zumindest einem der besagten Funknetzwerk-Controller kommenden ersten Kennungen von Mobilendgeräten (Tni), welche von der besagten ersten Nachricht vom Typ SMS-CB nicht erreicht werden konnten, eine zweite Nachricht vom Typ SMS Punkt-zu-Punkt zu erzeugen und diese anschließend an ein jedes der besagten nicht erreichten Mobilendgeräte (Tni) zu übertragen, nachdem sie ausgehend von deren jeweiligen ersten Funkkennungen zweite Kennungen von SMS Punkt-zu-Punkt-Verbindungen für diese Mobilendgeräte (Tni) ermittelt hat.
